Europäisches Patentamt

European Patent Office

Office européen des brevets

(19)

(11) Veröffentlichungsnummer: **0 242 581 B1**

(12) **EUROPÄISCHE PATENTSCHRIFT**

(45) Veröffentlichungstag der Patentschrift: **16.12.92**

(51) Int. Cl.⁵: **A01N 43/24**, A01N 25/02

(21) Anmeldenummer: **87103719.8**

(22) Anmeldetag: **14.03.87**

(54) **Insektizides Mittel auf der Basis des Wirkstoffes Endosulfan.**

(30) Priorität: **24.03.86 DE 3609919**

(43) Veröffentlichungstag der Anmeldung:
**28.10.87 Patentblatt 87/44**

(45) Bekanntmachung des Hinweises auf die Patenterteilung:
**16.12.92 Patentblatt 92/51**

(84) Benannte Vertragsstaaten:
**DE FR GB**

(56) Entgegenhaltungen:
**DE-A- 2 364 894**
**FR-A- 1 593 031**

(73) Patentinhaber: **HOECHST AKTIENGESELL-SCHAFT**
**Postfach 80 03 20**
**W-6230 Frankturt am Main 80(DE)**

(72) Erfinder: **Albrecht, Konrad, Dr.**
**Sodener Strasse 64**
**W-6233 Kelkheim (Taunus)(DE)**
Erfinder: **Alsop, Nicholas J.**
**Meadow Lane Hougton**
**Huntington Cambs. PE 17 2BP(GB)**
Erfinder: **Hüttenbach, Horst, Dr.**
**Johann-Strauss-Strasse 2**
**W-6233 Kelkheim (Taunus)(DE)**
Erfinder: **Röchling, Hans, Dr.**
**Geierfeld 25**
**W-6232 Bad Soden am Taunus(DE)**
Erfinder: **Westbury, Geoff**
**8, 74th Avenue Marbelreign**
**Harare(ZW)**

**Beschreibung**

Der Erreger der Schlafkrankheit, African Trypanosomiasis, wird durch die beiden Tsetsefliegenarten Glossina morsitans und Glossina pallidipes auf Mensch und Tier übertragen. Diese Krankheit ist eine der Hauptursachen dafür, daß große Teile des tropischen Afrika noch immer unterentwickelt sind. Nach bekannten Schätzungen könnten nach Vernichtung der Tsetse-Fliege in dem derzeitigen Befallsgebiet von ca. zehn Millionen Quadratkilometern etwa zwölf Millionen Stück Vieh zusätzlich gehalten werden.

Während früher zur Vernichtung der Tsetse-Fliege ganze Vegetationsgebiete abgebrannt wurden, wurden während der letzten fünfundzwanzig Jahre Insektizide zu deren Bekämpfung eingesetzt. Die Applikation der Insektizide erfolgte zunächst mit Spritzgeräten vom Boden aus. Danach benutzte man zunehmend Flugzeuge zur Behandlung großer Flächen. Für die Flugzeugapplikation wurden sogenannte ULV (= Ultra-Low-Volume) Formulierungen von Insektiziden entwickelt, die in Mengen von nur 1 bis 5 Litern Spritzbrühe pro Hektar mittels spezieller Vorrichtungen ausgebracht werden. Als Insektizid zur Bekämpfung der Tsetse-Fliege wird zunehmend der Wirkstoff Endosulfan eingesetzt, nachdem die persistenten Insektizide DDT und Endrin an Bedeutung verlieren. Endosulfan ist als cyclischer Sulfitester eines Diols leicht abbaubar und wird in tierischen und pflanzlichen Organismen metabolisiert.

ULV-Formulierungen von Endosulfan sind aus den deutschen Patentschriften DE 2364892 und 2364894 bekannt. Sie enthalten neben hochsiedenden Kohlenwasserstoffen pflanzliche Öle oder flüssige Ester. Man setzt vorwiegend solche Formulierungen ein, die 25 Gew.-% Endosulfan enthalten. Die Präparate besitzen Viskositäten von 8 - 28 mPas und sind relativ schwer flüchtig. Ihre Flammpunkte liegen zwischen 65 und 75°C.

Man appliziert diese Formulierungen in Mengen von 3,2 Litern/Hektar. Hierbei werden elektrisch angetriebene rotierende Atomizer-Applikatoren verwendet. Das Tropfenspektrum liegt bei einem mittleren Tropfendurchmesser von 120 - 150 Mikron. Diese Applikationsmethode wird auch als "residual technique" bezeichnet. Sie bewirkt eine gewisse Dauerwirkung gegen Neubefall mit Tsetse-Fliegen, da relativ große Mengen an Wirkstoff direkt in den Pflanzenbestand gebracht werden. Dieses Verfahren ist wegen der hohen Wirkstoffaufwendungen recht kostspielig. Es bestand daher die Aufgabe, neue Formulierungen zu entwikkeln, welche eine Reduktion der ausgebrachten Wirkstoffmengen erlauben, ohne daß der Bekämpfungserfolg gemindert wird.

Es wurden nun neue Endosulfan-Formulierungen gefunden, mit deren Hilfe sich die ausgebrachten Wirkstoffmengen überraschenderweise erheblich verringern lassen.

Gegenstand der Erfindung sind daher insektizide Mittel auf Basis des Wirkstoffes Endosulfan, die
a) 15 - 35 Gew.-% Wirkstoff,
b) als Lösungsmittel 59 - 83,4 Gew.-% eines Gemisches aus 7,5 - 10 Gew.-% eines oder mehrerer Esterverbindungen von $(C_1-C_{12})$ Mono-Alkoholen mit $(C_6-C_{10})$-Carbonsäuren, wobei im Falle von Monocarbonsäuren die Ester 8 bis 12 C-Atome und im Falle von Dicarbonsäuren 8 bis 32 C-Atome enthalten können, und 75,9 - 49 Gew.-% an aromatischen Kohlenwasserstoffen mit Siedebereichen zwischen 135°C und 220°C,
c) 0,5 - 5,0 Gew.-% eines Gemisches aus Fettalkoholethoxylaten oder Alkylphenolethoxylaten mit Ca-Dodecylbenzolsulfontat und
d) 0,5 - 2,0 Gew.-% eines Epoxids enthalten.

Die erfindungsgemäßen Formulierungen sind überraschenderweise leicht in sehr feine Tröpfchen mit mittleren Durchmessern von 25 - 30 Mikron zerstäubbar und verleihen Endosulfan eine hervorragende insektizide Wirkung. Als Lösungsmittel geeignete Ester kommen beispielsweise in Frage Ester von aliphatischen $(C_6-C_{10})$-Carbonsäuren, wie Capron-, Caprin-, Capryl- und Pelargonsäure, oder von aromatischen Carbonsäuren, wie Benzoesäure, Toluylsäuren, Salicylsäure und Phthalsäure.

Als Alkoholkomponenten für diese Ester sind beispielsweise zu nennen $(C_1-C_{12})$-Alkanole wie Butanol, n-Octanol, i-Octanol, Dodecanol oder Cyclohexanol. Konkrete Beispiele für geeignete Ester sind Capronsäureethylester, Pelargonsäureethylester, Benzoesäuremethyl- oder -ethylester, Salicylsäuremethyl-, propyl- oder -butylester, vor allem aber Diester der Phthalsäure mit aliphatischen oder alicyclischen $(C_1-C_{12})$-Alkoholen wie Phthalsäuredimethylester, -dibutylester,-diisooctylester,-didodecylester, -dicyclohexylester. Bevorzugt wird aufgrund der guten Pflanzenverträglichkeit jedoch Phthalsäurediisooctylester. Die Ester können auch in Mischung miteinander angewandt werden.

Geeignete aromatische Kohlenwasserstoffe sind z.B. Xylol oder aromatische Siedefraktionen im Siedebereich zwischen 135 - 220°C, z.B. ®Shellsol A und AB, ®Solvesso 200 und 150.

Als oberflächenaktive Mittel werden Fettalkoholethoxylate oder Alkylphenolethoxylate mit einem Zusatz von Ca-Dodecylbenzolsulfonat zugesetzt, wobei man insbesondere 0,3 - 2 Gew.-% Ca-Dodecylbenzolsulfonat neben 0,4 bis 1,0 Gew.-% eines Fettalkoholethoxylats oder Alkylphenolethoxylats verwendet. Von

2

letzteren werden insbesondere eingesetzt Polyglykolether von Oleylalkohol, Triisobutyl- oder Nonylphenol, z.B. die Produkte ®Emulsogen M, ®Sapogenat T 300 oder ®Arcopal N 300 der Hoechst AG

Die erfindungsgemäßen Formulierungen besitzen Viskositäten von 1,4 - 2,8 mPas bei 20°C und lassen sich auf Atomizer-Zerstäubern in ein besonders gleichmäßiges, feines Spektrum von Tropfen mit mittleren Durchmessern von 25-35 Mikron zerlegen.

Diese Formulierungen lassen sich dahr gut in der sogenannten "knock-down-technique" verwenden. Fliegende und sitzende Insekten lagern diese Tröpfchen direkt aus der Luft an, so daß man schon bei Aufwandmengen von 11 - 24 g Wirkstoff pro Hektar gute Bekämpfungserfolge erzielt. Da die Anwendung aus 10 bis 15 m Höhe erfolgen kann, erfaßt man bei einem Durchflug eine sogenannte Schwadbreite von 200 bis 300 m. Gegenüber der "residual-technique" erfordert die "knock-down-technique" Wiederholungen-(4 - 6)der Applikation in Intervallen von 21 Tagen. Dennoch ist diese Methode bei weitem wirtschaftlicher.

Als Epoxide lassen sich die aus DE-PS 2364894 bekannte Stabilisatoren wie Epichlorhydrin, Epoxypropan oder Epoxide pflanzlicher Öle wie Leinöl- oder Sojaölepoxid einsetzen.

Die Flammpunkte (geschlossen) der Formulierungen liegen zwischen 40°C und 60°C. Die Randwinkel eines Tröpfchens von 2 mm Durchmesser liegen zwischen 8 bis 12° (auf Glas mit einem Kontaktwinkelmesser gemessen). Die Präparate sind selbst unter tropischen Bedingungen stabil.

Die nachfolgenden Beispiele dienen der Erläuterung der Erfindung.

Formulierungsbeispiele

Beispiel 1

| 20,0 Gew.-% | Endosulfan |
|---|---|
| 12,0 Gew.-% | Phthalsäurediisooctylester |
| 65,5 Gew.-% | ®Shellsol A |
| 0,3 Gew.-% | Triisobutylphenolpolyglykolether |
| 0,4 Gew.-% | Oleylalkoholpolyglykolether |
| 0,8 Gew.-% | Dodecylbenzolsulfonsaures Calcium |
| 1,0 Gew.-% | epoxydiertes Sojaöl |

Phys. Kenndaten:  Flammpunkt geschlossen 46°C
Viskosität 1,1 + 0,2 mPas
Kontaktwinkel eines Tropfens auf Glas 8°
Dichte 0,987 g/cm$^3$ bei 20°C

Beispiel 2

| 30,0 Gew.-% | Endosulfan |
|---|---|
| 10,0 Gew.-% | Phthalsäurediisooctylester |
| 56,5 Gew.-% | ®Shellsol A |
| 0,6 Gew.-% | Oleylalkoholpolyglykolether (5 E O) |
| 0,4 Gew.-% | Triisobutylphenolpolyglykolether |
| 1,0 Gew.-% | Dodecylbenzolsulfonsaures Calcium |
| 1,5 Gew.-% | epoxydiertes Sojaöl |

Phys. Kenndaten:  Flammpunkt geschlossen 47°C
Viskosität 2,9 + 0,2 mPas bei 20°C
Kontaktwinkel eines Tropfens auf Glas 12°
Dichte: 1,044 g/cm$^3$ bei 20°C

Biologisches Beispiel

Die in Beispiel 2 angegebene Formulierung wurde in Afrika in einem Freilandversuch auf einer Fläche von 150 km$^2$ gegen beide Tsetse-Fliegenarten Glossina morsitans und Glossina pallidipes getestet. Der Versuch wurde mit einem zweimotorigen Propellerflugzeug bei einer Geschwindigkeit von 270 km/h durchgeführt. Es wurde der Applikator®Mikronair AU 5000 mit einer Propeller-Winkeleinstellung von 37,5° eingesetzt; die Geschwindigkeit des die Tropfeneinheit mitbestimmenden rotierenden Applikator-Zerstäubungssiebkorbes wurde auf 11 500 U/Min eingestellt. Die Applikationsbreiten betrugen 200 m; die Ausbringungsmenge der Formulierungen betrug 3,8 Liter/km², entsprechend 11,4 g Wirkstoff/ha.

Während der Versuche wurden intensive Bestimmungen der Tröpfchengrößen durchgeführt, wobei die Tropfen auf 0,65 m breiten präparierten mit Magnesiumoxid beschichteten Glasplatten aufgefangen und anschließend ausgemessen wurden. DieTropfendurchmesser variierten zwischen 25 und 32 Mikron.

Zur Beurteilung der Abtötungsrate wurden nur die weiblichen überlebenden Tiere gezählt, da nur diese eine zuverlässige Altersbestimmung zulassen. Es wurden Fliegenfallen, die als Lockstoff Aceton und Octenol enthielten, vor dem Versuch aufgestellt, außerdem wurden in fahrenden Fallen mit Aceton und Octenol getränkte Tücher benutzt und die Fliegen in Käschern aufgefangen.

Aus einem Vergleich des Fliegenbefalles vor und 3 sowie 9 Tage nach der Applikation ermittelte man eine Abtötungsrate von 99,1% gegenüber Gloss. Pallidipes und 98,8% gegenüber Gloss. morsitans.

**Patentansprüche**

1. Insektizide Mittel auf Basis des Wirkstoffes Endosulfan, dadurch gekennzeichnet, daß sie
    a) 15 - 35 Gew.-%Wirkstoff,
    b) als Lösungsmittel 59 - 83,4 Gew.-% eines Gemisches aus 7,5 - 10 Gew.-% eines oder mehrerer Esterverbindungen von $(C_1-C_{12})$ Mono-Alkoholen mit $(C_8-C_{10})$-Carbonsäure, wobei im Falle von Monocarbonsäuren die Ester 8 bis 12 C-Atome und im Falle von Dicarbonsäuren 8 bis 32 C-Atome enthalten können, und 75,9 - 49 Gew.-% an aromatischen Kohlenwasserstoffen mit Siedebereichen zwischen 135 °C und 220 °C,
    c) 0,5 - 5,0 Gew.-% eines Gemisches aus Fettalkoholethoxylaten oder Alkylphenolethoxylaten mit Ca-Dodecylbenzolsulfonat und
    d) 0,5 - 2,0 Gew.-% eines Epoxids enthalten.

2. Insektizide Mittel gemäß Anspruch 1, dadurch gekennzeichnet, daß sie $(C_1-C_{12})$Alkylester von Capronsäure, Caprinsäure, Caprylsäure, Pelargonsäure, Benzoesäure, Toluylsäure, Salicylsäure oder Phthalsäure enthalten.

3. Insektizide Mittel gemäß Ansprüchen 1 oder 2, dadurch gekennzeichnet, daß sie Phthalsäure$(C_1-C_{12})$-alkylester enthalten.

4. Insektizide Mittel gemäß Ansprüchen 1, 2 oder 3, dadurch gekennzeichnet, daß sie Phthalsäurediisooctylester enthalten.

5. Insektizides Mittel auf Basis des Wirkstoffes Endosulfan, dadurch gekennzeichnet, daß es
    a) 20,0 Gew.-%Wirkstoff,
    b) 65,5 Gew-% ®Shellsol A und 12,0 Gew.-% Phthalsäurediisooctylester als Lösungsmittel und
    c) 0,3 Gew.-%Triisobutylphenolpolyglykolether, 0,4 Gew.-% Oleylalkoholpolyglykolether und 0,8 Gew.-% dodecylbenzolsulfonsaures Calcium sowie
    d) 1,0 Gew.-% epoxydiertes Sojaöl enthält.

6. Verwendung der insektiziden Mittel gemäß einem der Ansprüche 1 bis 5 zur Bekämpfung von Insekten.

7. Verwendung der insektiziden Mittel gemäß einem der Ansprüche 1 bis 5 zur Bekämpfung der Tsetse-Fliege.

8. Verfahren zur Bekämpfung von Schadinsekten, dadurch gekennzeichnet, daß man eine wirksame Menge eines Mittels von Ansprüchen 1 bis 5 appliziert.

**Claims**

1. An insecticidal agent based on the active compound endosulfan, which contains
    a) 15 - 35% by weight of the active compound,
    b) as a solvent, 59 - 83.4% by weight of a mixture of 7.5 - 10% by weight of one or more ester

compounds of ($C_1$-$C_{12}$)-monoalcohols with a ($C_8$-$C_{10}$)-carboxylic acid, where the esters may contain 8 to 12 carbon atoms in the case of monocarboxylic acids and 8 to 32 carbon atoms in the case of dicarboxylic acids, and 75.9 - 49% by weight of aromatic hydrocarbons boiling within the range between 135°C and 220°C,

c) 0.5 - 5.0% by weight of a mixture of fatty alcohol oxyethylates or alkylphenol oxyethylates with Ca dodecylbenzenesulfonate and

d) 0.5 - 2.0% by weight of an epoxide.

2.  An insecticidal agent as claimed in claim 1, which contains a ($C_1$-$C_{12}$)-alkyl ester of caproic acid, capric acid, caprylic acid, pelargonic acid, benzoic acid, toluylic acid, salicylic acid or phthalic acid.

3.  An insecticidal agent as claimed in claim 1 or 2, which contains ($C_1$-$C_{12}$)-alkyl phthalate.

4.  An insecticidal agent as claimed in claim 1, 2 or 3, which contains diisooctyl phthalate.

5.  An insecticidal agent based on the active ingredient endosulfan, which contains
    a) 20.0% by weight of active ingredient,
    b) 65.5% by weight of ®Shellsol A and 12.0% by weight of diisooctyl phthalate as a solvent and
    c) 0.3% by weight of triisobutylphenol polyglycol ether, 0.4% by weight of oleyl alcohol polyglycol ether and 0.8% by weight of calcium dodecylbenzenesulfonate and
    d) 1.0% by weight of epoxidized soybean oil.

6.  Use of an insecticidal agent as claimed in one of claims 1 to 5 for controlling insects.

7.  Use of an insecticidal agent as claimed in one of claims 1 to 5 for controlling the tsetse fly.

8.  A method of controlling insect pests, wherein an effective amount of an agent of claims 1 to 5 is applied.

## Revendications

1.  Agents ou produits insecticides, à base de la substance active endosulfan, caractérisés en ce qu'ils contiennent :
    (a) 15 à 35 % en poids de la substance active,
    (b) comme solvant, 59 à 83,4 % en poids d'un mélange de 7,5 à 10 % en poids d'un ou plusieurs esters de monoalcools en $C_1$ à $C_{22}$ avec de l'acide carboxylique en $C_5$ à $C_{10}$, et, dans le cas des acides monocarboxyliques, les esters peuvent contenir 8 à 12 atomes de carbone, et dans le cas des acides dicarboxyliques, ils peuvent contenir 8 à 32 atomes de carbone, et de 75,9 à 49% en poids d'hydrocarbures aromatiques ayant des domaines d'ébullition compris entre 135°C et 220°C,
    (c) 0,5 à 5,0 % en poids d'un mélange d'éthoxylates d'alcools gras ou d'éthoxylates d'alkyl phénols, avec du dodécyl benzène sulfonate de Ca, et
    (d) 0,5 % à 2,0 % en poids d'un époxyde .

2.  Produits insecticides selon la revendication 1, caractérisés en ce qu'ils contiennent des esters alkyliques (en $C_1$ à $C_{12}$) de l'acide caproïque, de l'acide caprique, de l'acide caprylique, de l'acide pélargonique, de l'acide benzoïque, de l'acide toluylique, de l'acide salicylique ou de l'acide phtalique.

3.  Produits insecticides selon les revendications 1 ou 2, caractérisés en ce qu'ils contiennent un phtalate d'alkyle (en $C_1$ à $C_{12}$).

4.  Produits insecticides selon les revendications 1,2 ou 3, caractérisés en ce qu'ils contiennent du phtalate de diisooctyle.

5.  Produit insecticide à base de la substance active endosulfan, caractérisé en ce qu'il contient
    (a) 20,0 % en poids de la substance active,
    (b) 65,5 % en poids de "Shellsol" A ($^R$) et 12,0 % en poids de phtalate de diisooctyle comme solvant, et
    (c) 0,3 % en poids d'un éther polyglycolique de triisobutyl phénol, 0,24 % en poids d'un éther

5

polyglycolique de l'alcool oléylique et 0,8 % en poids de dodécyl benzène sulfonate de calcium, ainsi que
(d) 1,0 % en poids d'une huile de soja époxydée.

6. Utilisation du produit insecticide selon l'une des revendications 1 à 5 pour combattre des insectes.

7. Utilisation du produit insecticide selon l'une des revendications 1 à 5 pour combattre la mouche tsétsé .

8. Procédé pour combattre des insectes nuisibles, caractérisé en ce qu'on applique une quantité efficace d'un produit selon les revendications 1 à 5.